# EUROPEAN PATENT APPLICATION

(11) **EP 4 648 295 A1**
(43) Date of publication of application: **12.11.2025**
(21) Application number: 25173971.0
(22) Date of filing: 02.05.2025
(51) Int. Cl.: H04B 1/10

(54) **METHOD AND APPARATUS FOR IMPROVING COEXISTENCE PERFORMANCE OF CO-LOCATED RADIOS BY A LOW NOISE AMPLIFIER PROTECTION CIRCUIT**

(30) Priority: 06.05.2024 IN 202441035602
(71) Applicant: NXP USA, Inc., Austin, TX 78735 (US)
(72) Inventor: MADHIRA, Sriharsha, 5656AG Eindhoven (NL); PERALA, Mangesh Kumar, 5656AG Eindhoven (NL); PATEL, Jigar, 5656AG Eindhoven (NL)
(74) Representative: Hardingham, Christopher Mark

(57) **Abstract**

An indication is received that an aggressor radio co-located with a victim radio is to transmit an aggressor signal. A low noise amplifier (LNA) protection circuit is activated in response to a desired signal being received and based on the indication. The LNA protection circuit is deactivated in response to the receipt of the desired signal being completed.

## Description

### FIELD OF USE

The present disclosure relates generally to a wireless network, and more particularly, to a method and apparatus for improving coexistence performance of co-located radios by a low noise amplifier protection circuit.

### BACKGROUND

A multi-radio system has multiple radios which are co-located on a system-on-a-chip (SoCs) or as multi-chips. The radios are typically in a small form factor but isolated to reduce interference between an aggressor signal transmitted by one radio and a desired signal received by another radio. But because of this proximity and in a case of a low isolation, a transmitter of one radio transmitting the aggressor signal could saturate or desense a low noise amplifier (LNA) of a receiver of the other radio which receives the aggressor signal in addition to a desired signal causing degradation of the desired signal and specifically generating bit errors in the desired signal. The LNA of the receiver is saturated when a power of the aggressor signal exceeds a maximum level such that the receiver is not able to recover the bits of the desired signal. The LNA is desensed when a sensitivity of the LNA to the desired signal is reduced by interference from the aggressor signal. To overcome the saturation or desensing, a gain of the LNA is lowered and a gain of a narrow band amplifier of the receiver is adjusted to selectively amplify the desired signal. By reducing the LNA gain, any interference due to the aggressor signal is not further amplified and the narrow band amplifier amplifies the desired signal at a higher gain.

### BRIEF DESCRIPTION OF THE DRAWINGS

The following detailed description of the preferred embodiments of the present disclosure will be better understood when read in conjunction with the appended drawings. The present disclosure is illustrated by way of example, and not limited by the accompanying figures, in which like references indicate similar elements.
FIG. 1 is an example block diagram of conventional co-located radios and operation of a receiver of a radio of the co-located radios.
FIGs. 2A & 2B illustrates example conventional co-existence operation of the co-located radios.
FIG. 3 is a simplified block diagram of co-located radios that operate in co-existence in accordance with an embodiment.
FIG. 4 is a more detailed block diagram of the co-located radios and operation of a receiver of a radio of the co-located radios in accordance with an embodiment.
FIG. 5 illustrates co-existence operation of the co-located radios in accordance with an embodiment.
FIG. 6 is a flow chart of functions associated with control of an LNA protection circuit in accordance with an embodiment.
FIG. 7 illustrates throughput of a victim radio versus victim receive power in accordance with an embodiment.
FIG. 8 illustrates sensitivity of the victim radio versus aggressor power in accordance with an embodiment.

### DETAILED DESCRIPTION

The detailed description of the appended drawings is intended as a description of the currently preferred embodiments of the present disclosure, and is not intended to represent the only form in which the present disclosure may be practiced. It is to be understood that the same or equivalent functions may be accomplished by different embodiments that are intended to be encompassed within the spirit and scope of the present disclosure.

Co-located radios in consumer products are less isolated as a form factor of the consumer products become smaller. Further, an aggressor signal transmitted by a transmitter of one radio could be received by a receiver of another radio at a higher power than a desired signal. The one radio which transmits the aggressor signal is an aggressor radio while the other radio which receives the desired signal is a victim radio. An LNA protection circuit in the victim radio increases a lifetime of the LNA which is otherwise exposed to the aggressor signal by attenuating the aggressor signal by 20-25 dB, but also reduces a power of the desired signal. The LNA protection circuit is typically activated when the aggressor signal received at the victim radio has a high power (e.g., 4-5dB) and disabled otherwise.

Embodiments disclosed herein are directed to controlling activation and deactivation of the LNA protection circuit to improve reception of a desired signal by the receiver of the victim radio in presence of the aggressor signal received by the victim radio when the two radio are co-located. The LNA protection circuit is activated based on a victim radio state and aggressor radio state. For example, the LNA protection circuit is activated in response to the desired signal being received and based on a power of the desired signal expected to exceed a threshold level and a power of an interference signal expected to exceed a threshold level. The interference power is determined from an aggressor power of the aggressor signal and indication of isolation between the two radios. The LNA protection circuit attenuates the desired signal and the aggressor signal which are received at the receiver of the victim radio so that a narrow band amplifier of the victim radio is able amplify the desired signal at a higher gain and receive bits with fewer errors. The LNA protection circuit is then deactivated in response to reception of the desired signal being completed. In an example, a multi-radio coexistence arbitrator block activates and deactivates the LNA protection circuit and an automatic gain controller maintains a same gain of the LNA and narrow band amplifier of the victim radio while the desired signal is being received. Well known instructions, protocols, structures, and techniques have not been shown in detail in order not to obfuscate the description.

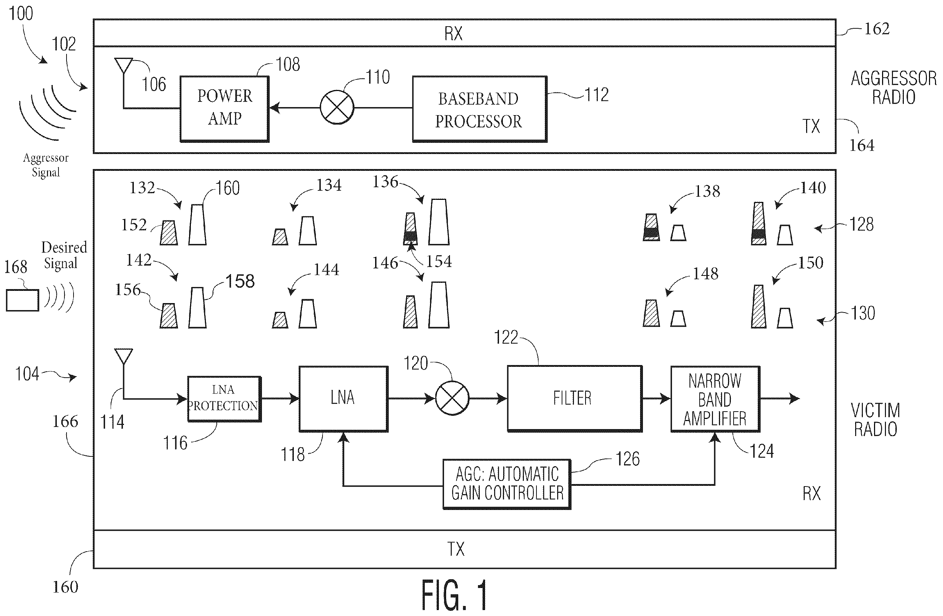

FIG. 1 is an example block diagram of conventional co-located radios 100 and operation of a receiver of a radio of the co-located radios. The co-located radio may include a first radio 102 and second radio 104 which are in proximity to each other. For example, the first radio 102 may be a wireless communication device such as a Bluetooth (BT) protocol device, a wireless local area network (WiFi) protocol device defined by IEEE 802.11, or the like. Further, the second radio 104 may be another wireless communication device such as a Bluetooth (BT) protocol device, a wireless local area network (WiFi) protocol device defined by IEEE 802.11, or the like. In an example, the co-located radios may be implemented as one or more system on a chip (SoC) such as a multi-radio chipset physically connected together by a wired connection. In an example, a respective protocol operating on the first radio 102 and second radio 104 may be different.

Each radio 102, 104 may have a respective receiver and a transmitter. The radio 102 may have transmitter 164 and receiver 162. Additionally, the radio 104 may have transmitter 160 and receiver 166. In an example, the receiver 166 of the radio 104 may have an antenna 114, a low noise amplifier (LNA) protection circuit 116, an LNA 118, a mixer 120, a filter 122, and a narrow band amplifier 124. The antenna 114 may be configured to receive a signal in a signal bandwidth and the LNA protection circuit 116 may be activated to attenuate the signal by 20-25 dB in an example when the aggressor signal is a high power signal and deactivated after a fixed time such as 500 ms to 5 seconds after being activated. In an entire 2.4 GHz band, an 80 MHz bandwidth may be available for reception and the LNA 118 may amplify the received signal over the entire 80 MHz bandwidth. The mixer 120 may down-convert the received signal to baseband and the filter 122 may attenuate the aggressor signal from the received signal. The narrow band amplifier 124 may then selectively amplify desired frequencies of the received signal within a bandwidth less than the bandwidth of the LNA 118. If the radio is Bluetooth, the desired frequency bandwidth which is amplified may be 1 MHz within the 80 MHz bandwidth and if the radio is WiFi, the desired frequency bandwidth which is amplified may be 20 MHz. The receiver 166 may also have an automatic gain control (AGC) 126 to control a gain of the LNA 118 and the narrow band amplifier 124. In an example, the transmitter 164 of the radio 102 may have an antenna 106, a power amplifier 108, a mixer 110, and a baseband processor 112. The baseband processor 112 may generate a signal to be transmitted which is provided to the mixer 110 which upconverts the signal generated by the baseband processor 112 to a radio frequency (RF) signal. The power amplifier 108 amplifies the RF signal which is then transmitted over the antenna 106. The receiver 162 and transmitter 160 may be implemented in a manner similar to that of the receiver 166 and transmitter 164, respectively and details of implementation are not illustrated for conciseness. Further in some examples, an antenna of a receiver and transmitter may be shared by a radio or the transmitter and receiver of a radio may have its own antenna.

In an example, the aggressor radio 102 may transmit a signal referred to as an aggressor signal having an aggressor power. The aggressor radio 102 may operate in co-existence with the radio 104 which is a victim radio 104 in the example. Coexistence is the capability of multiple wireless devices and services in the same geographical area to access the same RF spectrum bandwidth simultaneously.%%The victim radio 104 may be arranged to receive a desired signal which is in a bandwidth defined by the wireless protocol of the victim radio 104. The desired signal may be a wireless signal different from the aggressor signal received from a wireless device 168 which operates with the same wireless protocol of the victim radio 104. The wireless device 168 is remote to the co-located radios 100, but the victim radio 104 being in co-existence with the aggressor radio 102 may also receive the aggressor signal in a same signal bandwidth which is being amplified by the LNA 118. The aggressor signal interferes with receiving the desired signal at a same time.

Flow 130 illustrates a frequency spectrum of a desired signal shown with cross hatching and aggressor signal shown without cross hatching as the victim radio 104 processes the signals. The signals 142 received by the antenna 114 may include desired signal 156 and the aggressor signal 158 in the signal bandwidth which is collectively referred to as a received signal which may be received at a same time. The aggressor signal 158 and desired signal 156 may be in a same 80 MHz bandwidth amplified by the LNA 118 and the desired signal 156 may have a lower power than the aggressor signal 158 as shown by the aggressor signal 158 having a higher amplitude than the desired signal 156. The LNA protection circuit 118 may receive the signals from the antenna 114. The LNA protection circuit 118 may determine that a power measurement of the aggressor signal 158 exceeds a threshold. Typically, the LNA protection circuit 116 is activated when power of the aggressor signal 158 exceeds the threshold power and otherwise deactivated. In an example, the LNA protection circuit 116 when activated may attenuate both the desired signal 156 and the aggressor signal 158 and shown to output attenuated signals 144. The attenuation may be generated by changing an impedance of the LNA protection circuit 116 to reflect a certain power of the received signal. Alternatively, the LNA protection circuit 116 may comprise a switch which is either configured to not directly connect the antenna 114 to the LNA 116 or directly connect the antenna 114 to the LNA 116. When the antenna 114 is not directly connected to the LNA 118, the aggressor signal 158 is attenuated. When the antenna 114 is directly connected to the LNA 118, the aggressor signal 158 is not attenuated. The signal output by the LNA protection circuit 116 is amplified by the LNA 118 to output signals 146. Because the signal 144 is attenuated, the LNA 118 is not saturated. The signal 146 is then provided to the mixer 120 which down-converts the amplified signal 146 to baseband. The filter 122 then attenuates the aggressor signal so that the desired signal has a higher power than the aggressor signal as shown by signals 148. The narrow band amplifier 124 amplifies the desired signal as shown by signals 150 so that an analog to digital converter (ADC) (not shown) in the receive path is not saturated. In an example, the AGC 126 may control a gain of the LNA 118 and the narrow band amplifier 124 which is set when the desired signal 126 is received and maintained at a same level while the desired signal 156 is received. The gain setting may be based on a peak power of the received signal in an example.

In some examples, the aggressor signal 158 may be received after the desired signal 156 is received and continue to be received while the desired signal 156 is being received. The LNA protection circuit 116 may be activated when the aggressor signal 158 is received. In another example, the aggressor signal 158 may stop being received and while the desired signal 156 is still being received. The LNA protection circuit 116 may be deactivated when the aggressor signal 158 is no longer being received but the desired signal 156 is still being received. The AGC gain setting for the LNA 118 and narrow band amplifier 124 are configured when the desired signal 156 is initially received and maintained the same while the desired signal 156 is being received such that the configured AGC gain setting for the LNA 118 and narrow band amplifier 124 may cause saturation or desensitization of the LNA 118 when the receipt of the aggressor signal 158 starts or stops during receipt of the desired signal 156.

Flow 128 illustrates a frequency spectrum of a desired signal 152 and aggressor signal 160 when the victim radio 104 is processing the desired signal 152 and then an aggressor signal 160 starts being received or stops being received in a same signal bandwidth amplified by the LNA 118. If the aggressor signal 160 stops being received, then the LNA protection circuit 116 may be deactivated after a fixed time while the desired signal 152 is being received causing increase in power of the desired signal that is received by the LNA 118. If the aggressor signal 160 starts to be received, then the LNA protection circuit 116 may be activated while the desired signal 152 is being received causing attenuation in the desired signal 152 that is received by the LNA 118. Signals 134 show an output of the LNA protection circuit 116 which is input to the LNA 118. The LNA 118 may be saturated if the LNA protection circuit 116 is deactivated and the AGC gain is too high. Alternatively, if the LNA protection circuit 116 is activated, the LNA 118 may be desensed because the AGC gain is too low. The saturation or desensing will produce bit errors in the desired signal where one or more bits received may not match one or more bits transmitted. This error is illustrated in the signals 136 output by the LNA 118 as portion 154 in the spectrum of the desired signal. The mixer 120 may down-sample the signals 134 to baseband and the filter 122 may attenuate the aggressor signal present as shown by signals 138. The narrow band amplifier 124 may amplify the desired signal output by the filter 122 as shown by signals 140. If the gain by the AGC 126 is too low when the LNA protection circuit 116 is activated, the narrow band amplifier 124 may be desensed, and bits of the desired signal output by the receiver 104 may be errored. Alternatively, if the LNA protection circuit 116 is deactivated, the gain of the ACG 122 may be too high, the narrow band amplifier 124 may become saturated, and bits of the desired signal 152 output by the receiver 104 may be errored.

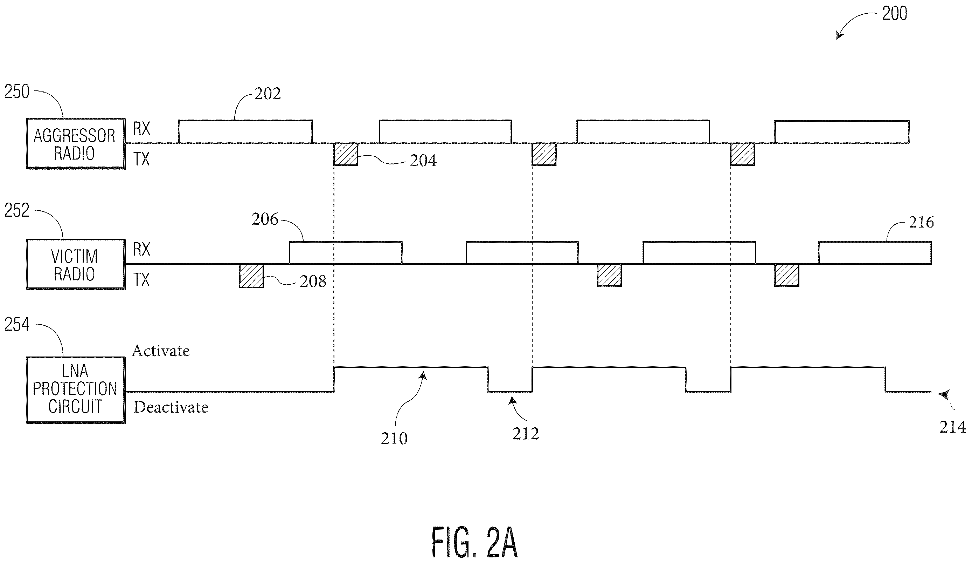

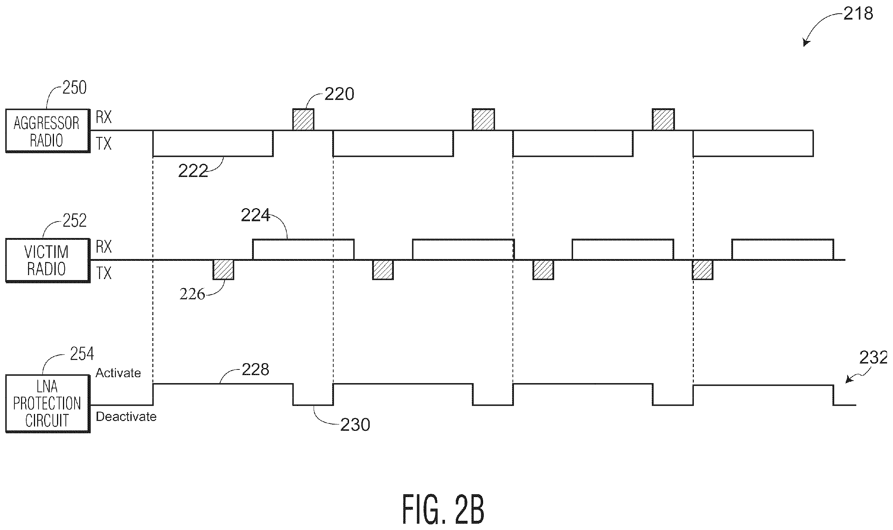

FIGs 2A & 2B illustrates example conventional co-existence operation of the co-located radios. A transmission and reception by aggressor radio 250 and transmission and reception by victim radio 252 is shown along with operation of an LNA protection circuit 254 of the victim radio 252.

FIG. 2A illustrates operation of the LNA protection circuit 254 when an aggressor signal is received by the victim radio 252 and then a desired signal is received by the victim radio 252. The desired signal may be a long packet, an example of which is long packet 206, received by the victim radio 252 in response to a short packet, an example of which is short packet 208, transmitted by the victim radio 252 in accordance with a victim radio protocol. The aggressor signal may be a short packet, an example of which is short packet 204, transmitted by the aggressor radio 250 after a long packet, an example of which is long packet 202 is received by the aggressor radio 250 in accordance with an aggressor radio protocol. A packet as referred to herein may be a structure for carrying data, e.g., bits, over an air interface. The victim radio 252 may determine when the aggressor signal is received and not received based on a power measurement indicative of receipt of the aggressor signal. If received, the LNA protection circuit 254 may be activated for a fixed time and then deactivated. In an example, the long packet 202, 206 may be a data packet and the short packet 204, 208 may be a control packet such as a trigger packet or acknowledgement packet. Waveform 214 shows whether the LNA protection circuit 254 is activated or deactivated. The LNA protection circuit 254 may be activated when the received signal exceeds a threshold power. In an example, short packet 204 from the aggressor radio 250 which is an acknowledgement to the long packet 202 received at the aggressor radio 250 may cause activation of the LNA protection circuit 254 at the victim radio 252 for a fixed period of time shown by a high signal 210 and then the LNA protection circuit 254 is deactivated shown by a low signal 212. The activation of the LNA protection circuit 254 weakens the desired signal at the victim radio 252 and results in bit errors in the long packet 206 received by the victim radio 252 because a gain of AGC 122 was set before aggressor signal 204 was received and not increased while the long packet 206 is received and the LNA protection circuit 254 is activated. The LNA 118 and narrow band amplifier 124 may be desensitized. Long packet 216 may be received when a short packet is not received from the aggressor radio 250 but the LNA protection circuit 254 may be deactivated during the time when the long packet 216 is received which could also cause bit errors in the long packet 216 output by the victim radio 252 based on saturation of the LNA 118 and narrow band amplifier 124. A gain of AGC 126 was set when the desired signal 216 was received and not decreased while the long packet 206 is received and after the LNA protection circuit 254 is deactivated.

FIG. 2B illustrates operation of the LNA protection circuit 254 when a desired signal is received by the victim radio 252 while an aggressor signal is already being received by the victim radio 252. The aggressor signal may be a long packet, an example of which is long packet 222, transmitted by the aggressor radio 250 in response to a short packet, an example of which is short packet 220 received by the aggressor radio 250. The desired signal may be a long packet, an example of which is long packet 224, received by the victim radio 252 in response to a short packet, an example of which is short packet 226 transmitted by the victim radio 252. The victim radio 252 may determine a timing of when the aggressor signal is received and not received based on a power measurement indicative of receipt of the aggressor signal. The long packet 222 may result in a longer interference duty cycle while the long packet 224 is being received. Typically, the LNA protection circuit 254 is activated shown by waveform 232 when the received signal exceeds a threshold power. In an example, the long packet 222 from the aggressor radio 250 may cause activation of the LNA protection circuit 254 at the victim radio 252 for a fixed period of time shown as high signal 228. The activation of the LNA protection circuit 254 may weaken the desired signal when the long packet 224 is received. The LNA protection circuit 254 may be then deactivated as shown by low signal 230 in the waveform 232 after the end of the long packet 222 and after a fixed period of time. The long packet 224 which is continued to be received at the victim radio 252 may result in saturation of the LNA 118 and narrow band amplifier 124 and bit errors in the long packet 224 output by the receiver 104 because the gain of AGC 122 was set when aggressor signal 222 was being received and then not reduced while the long packet 224 is received and after the LNA protection circuit 254 is deactivated.

Embodiments disclosed herein are directed to using the LNA protection circuit to improve reception of a desired signal by the receiver of the victim radio in presence of the aggressor signal transmitted by the transmitter of the aggressor radio and received by the victim radio when the two radio are co-located. The LNA protection circuit is activated based on a victim radio state and aggressor radio state. For example, the LNA protection circuit is activated in response to the desired signal being received and based on a power of the desired signal expected to exceed a threshold level and a power of an interference signal expected to exceed a threshold level. The interference power is determined from an indication of aggressor power of the aggressor signal and indication of isolation between the two radios, where the isolation is indicated by a level of attenuation (e.g., dB) of the aggressor signal from the aggressor radio to the victim radio. The LNA protection circuit is then deactivated in response to reception of the desired signal being completed. The LNA protection circuit attenuates the desired signal and the aggressor signal which is received at the receiver of the victim radio so that the narrow band amplifier of the victim radio is able to use a high linearity gain to recover the desired signal. In an example, a multi-radio coexistence arbitrator of the victim radio determines when to activate and deactivate the LNA protection circuit and an automatic gain controller maintains a same gain of the LNA and narrow band amplifier of the victim radio while the desired signal is being received.

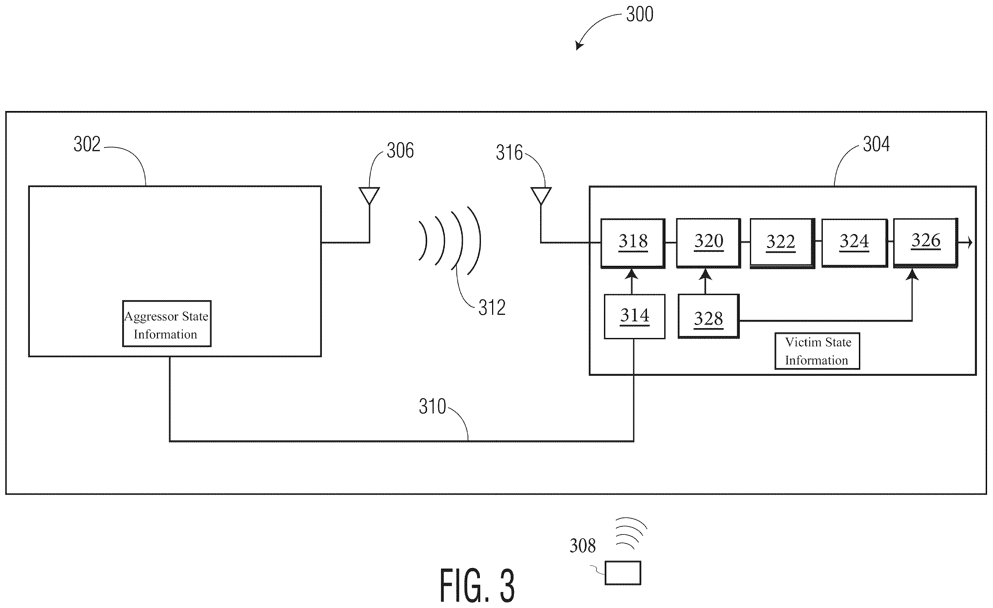

FIG. 3 is a simplified block diagram of co-located radios 300 that operate in co-existence in accordance with an embodiment. The co-located radios 300 may include the aggressor radio 302 and the victim radio 304 which are able to communicate via a wired connection 310 because of the co-location in addition to wireless communication 312 by respective antenna 306, 316. The wired connection 310 may allow for the aggressor radio 302 to provide state information to the victim radio 304 over a wired connection and not a wireless connection to indicate whether the aggressor radio 302 will be transmitting an aggressor signal 312. In an example, the wired connection 310 may operate a proprietary or standardized wired communication protocol. For example, if the aggressor radio 302 is receiving a long packet such as a data packet the radio 302 may be expected to transmit a short packet as an acknowledgment or trigger in accordance with the wireless protocol and which is indicated by the state information. As another example, if the aggressor radio 302 is receiving a short packet as a trigger or acknowledgment the radio 302 may be expected to transmit a long packet such as a data packet in accordance with the wireless protocol and which is indicated by the state information. The victim radio 304 may also include a receive chain which has an antenna 316, an LNA protection circuit 318, an LNA 320, mixer 322, filter 324, and a narrow band amplifier 326. Further, the victim radio may have a multi-radio chip (MRC) arbitrator 314 and AGC 328. The MRC arbitrator 314 may activate and deactivate the LNA protection circuit 318 of the victim radio 304 to protect the LNA 320 and improve reception of a desired signal from a remote wireless device 308 by the victim radio 304. In an example, the state of the aggressor radio 302 and a state of the victim radio 304 may be used to control operation of the LNA protection circuit 318. The MRC arbitrator 314 may determine that the aggressor radio 302 is to transmit an aggressor signal based on aggressor state information of the aggressor radio 302 received via the wired connection 310. Additionally, the MRC arbitrator 314 may determine from victim state information of the victim radio 304 that the victim radio 304 is to receive a desired signal. In response, the MRC arbitrator 314 may activate the LNA protection circuit 318 while the victim radio 304 actually receives the desired signal rather than the LNA protection circuit 318 being activated only when the aggressor signal is being received. When the victim radio 304 is no longer receiving the desired signal, the MRC arbitrator 314 may then deactivate the LNA protection circuit 318 for the victim radio 304. The LNA protection circuit 318 is not deactivated at a fixed time from its activation but dependent on a whether the desired signal being received. Further, bits in the desired signal are less errored by the activation and deactivation of the LNA protection circuit 318 as disclosed in the embodiment. The ACG 328 may also maintain a same gain of the narrow band amplifier 326 and LNA 320 while the desired signal is being received by the receiver 304.

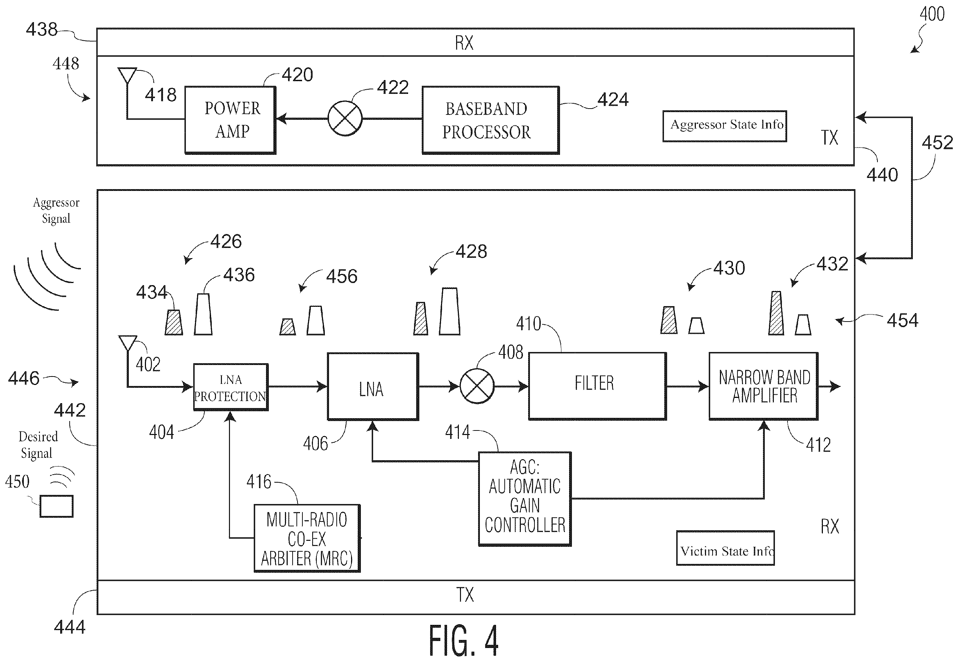

FIG. 4 is a more detailed block diagram of the co-located radios 400 and operation of a receiver of a radio of the co-located radios 400 in accordance with an embodiment. In an example, the co-located radios 400 may be implemented as a single system on a chip (SoC) or a multi-radio chipset (SoCs) and which are physically connected together. The co-located radios 400 may include a first radio 446 and second radio 448 which coexist and are in proximity to each other. For example, the first radio 446 may be a wireless communication device such as a Bluetooth (BT) protocol device, a wireless local area network (WiFi) protocol device, or the like. Further, the second radio 448 may be another wireless communication device such as a Bluetooth (BT) device, a wireless local area network (WiFi) device, or the like. In an example, the protocol of the first radio 446 and second radio 448 may be different.

Each radio 446, 448 may have a respective receiver and a transmitter. The radio 446 may have transmitter 444 and receiver 442. Additionally, the radio 448 may have transmitter 440 and receiver 438. In an example, the receiver 442 of the radio 446 may have an antenna 402, an low noise amplifier (LNA) protection 404, a low noise amplifier (LNA) 406, a mixer 408, a filter 410, and a narrow band amplifier 412. The antenna 402 may be configured to receive a signal in a signal bandwidth and the LNA protection 404 may be activated to attenuate the signal, e.g., by 20-25 dB. The bandwidth of the LNA 406 may be a 80 MHz bandwidth of a 2.4 GHz signal and the LNA 406 may amplify the received signal over the 80 MHz bandwidth. The mixer 408 may down-convert the received signal to baseband and the filter 410 may attenuate the aggressor signal. The narrow band amplifier 412 may then selectively amplify frequencies of the desired signal within a bandwidth less than the bandwidth of the LNA 406 such as in a 1 MHz bandwidth when the radio 446 is a BT radio and in a 20 MHz bandwidth when the radio 446 is a WiFi radio. The receiver 442 may also have an automatic gain control (AGC) 414 to control a gain of the LNA 406 and the narrow band amplifier 412. In an example, the transmitter 440 of the radio 448 may have an antenna 418, a power amplifier 420, a mixer 422, and a baseband processor 424. The baseband processor 424 may generate a signal to be transmitted which is provided to the mixer 422 which upconverts the signal generated by the baseband processor to a radio frequency (RF) signal. The power amplifier 420 amplifies the RF signal which is then transmitted over the antenna 418. The receiver 438 and transmitter 444 may be implemented in a manner similar to that of the receiver 442 and transmitter 448, respectively and details of implementation are not illustrated for conciseness. Further in some examples, an antenna of a receiver and transmitter may be shared by a radio or the transmitter and receiver of a radio may have its own antenna.

In examples, the victim radio 446 may have an MRC arbitrator 416. The MRC arbitrator 416 may be communicatively coupled to the aggressor radio 448 by a wired connection 452. The aggressor radio 448 may maintain state information of whether it will be transmitting an aggressor signal and a form of the signal such as a short packet or long packet. The MRC arbitrator 416 may receive this state information via wired connection 452. Further, the MRC arbitrator 416 may determine from state information of the victim radio 446 whether a desired signal will be received. Based on the state information, the MRC arbitrator 416 may activate and de-activate the LNA protection circuit 404. In an example, the MRC arbitrator 416 may determine the victim radio 446 is to receive a packet of the desired signal and the aggressor radio 448 is to send a packet of the aggressor signal. Based on this determination, the MRC arbitrator 416 may activate the LNA protection circuit 404 while the victim radio 446 receives the desired signal and the ACG 414 may maintain a same gain corresponding to the LNA protection circuit 404 being activated until receipt of the desired signal is completed. The MRC arbitrator 416 may then deactivate the LNA protection circuit 404 when the desired signal is no longer being received. The disclosed activation and deactivation of the LNA protection circuit 404 may reduce bit errors of the desired signal which is output by the receiver 442 and improve a signal-to-noise ratio.

Flow 454 illustrates a frequency spectrum of a desired signal 434 and aggressor signal 436 as the victim radio 446 processes the received signal. The antenna 402 in the receiver 442 of the victim radio 446 may receive the desired signal and the aggressor signal as shown by signals 426 in a frequency domain. In the frequency domain, the desired signal being processed is illustrated with cross hatching and the aggressor signal being processed is illustrated without cross hatching. In an example, the MRC arbitrator 416 may detect from the aggressor state information received via the wired connection 452 that the aggressor radio 448 will be transmitting the aggressor signal 436 and from the victim state information that the victim radio 446 will be receiving the desired signal 434. Based on this determination, the MRC arbitrator 416 may turn on the LNA protection circuit 404 when the desired signal 434 is actually received. When the LNA protection circuit 404 is on, the aggressor signal and the desired signal may be attenuated as shown by signals 456 so that it does not saturate the LNA 406. The LNA 406 may amplify the aggressor signal and the desired signal as shown by signals 428. The mixer 408 will down-convert the received signal to baseband and the filter 410 may attenuate the aggressor signal as shown by signals 430. The narrow band amplifier 412 will amplify the desired signal in the band of the desired signal as shown by signals 432 to recover desired signal with reduced bit errors. In examples, gain of the AGC 414 will be set when the desired signal is received and the AGC 414 may not change the gain of the LNA 406 or narrow band amplifier 412 while the desired signal is being received to avoid saturation or desensitization of the LNA 406 or narrow band amplifier 412 while the desired signal is received. Further, the MRC circuit 416 may deactivate the LNA protection circuit 404 based on the state information from the victim radio 452 indicating that receipt of the desired signal is completed.

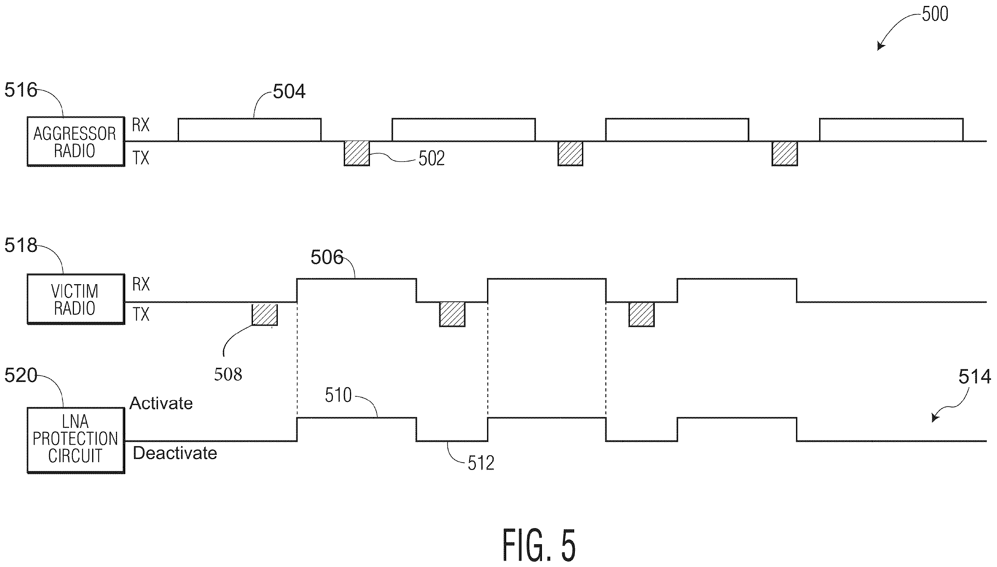

FIG 5 illustrates operation of the LNA protection circuit during receipt of the desired signal in accordance with an embodiment. An aggressor signal may be a short packet 502 and the desired signal may be a long packet 506. The MRC arbitrator may determine based on the state information of the aggressor radio 516 and victim radio 518 that the aggressor radio 516 will transmit the packet 502 while the victim radio 518 is receiving the packet 506. For example, if the aggressor radio 516 receives the long packet 504 the aggressor radio 516 will transmit the short packet 502 based on the aggressor radio protocol. Further, if the victim radio 518 transmits a short packet 508, the victim radio 516 will receive the long packet 506 based on the victim radio protocol. As another example not shown, if the aggressor radio 516 receives a short packet such as a trigger or acknowledgement packet the aggressor radio 516 will transmit a long packet such as a data packet based on the aggressor radio protocol. Further, in this example, if the victim radio 518 transmits a long packet such as a data packet, the victim radio 518 will receive a short packet such as an acknowledgment packet or trigger packet based on the victim radio protocol. The MRC arbitrator 416 may then cause the LNA protection circuit 520 to be activated while the victim radio 518 is receiving the long packet 506 and deactivated when the victim radio 518 is not receiving the long packet 506 rather than only being activated based on receipt of the aggressor signal. Waveform 514 indicates activation and deactivation of the LNA protection circuit 520 in examples before the aggressor signal is actually received. The waveform 514 indicates by high signal 510 that the LNA protection circuit 518 is activated and indicates by low signal 512 that the LNA protection circuit 518 is not activated. In an example, the LNA protection circuit at the victim radio 518 is already activated when the short packet 502 from the aggressor radio 516 is received in response to reception of long packet 504 and is activated for a period of time equal to a duration of the packet 506. The LNA protection circuit 520 attenuates the receive signal when the long packet 506 starts being received and the AGC gain is configured to not change while the long packet 506 is being received so that bit errors in the packet 506 output by the receiver is reduced. In examples, gain of the AGC 414 will be set when the desired signal is received and the AGC 414 may not change the gain of the LNA 406 or narrow band amplifier 412 while the desired signal is being received to avoid saturation or desensitization of the LNA 406 or narrow band amplifier 412 while the desired signal is received. The LNA protection circuit 520 is then deactivated by the MRC arbitrator 416 when receipt of the long packet 506 is completed as indicated by the victim state information and the victim radio protocol.

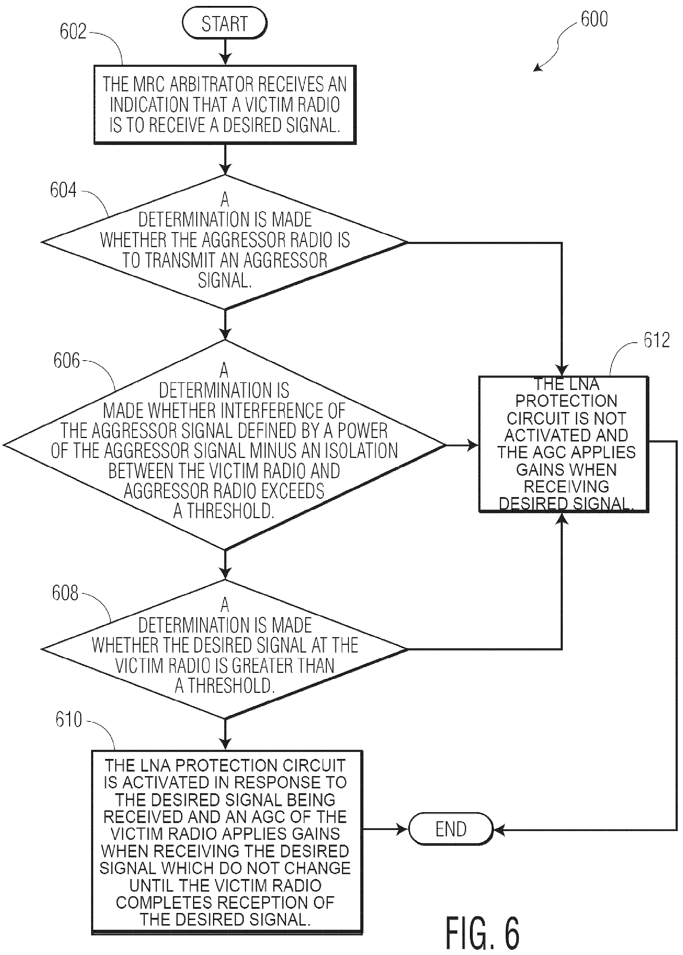

FIG. 6 is a flow chart of functions 600 associated with control of the LNA protection circuit in accordance with an embodiment. The functions may be performed by the MRC arbitrator 416 of the receiver in the victim radio in an example.

At 602, the MRC arbitrator receives an indication that a victim radio is to receive a desired signal. The MRC may receive an indication from the victim radio based on state information from the victim radio. This indication may be based on the victim radio having transmitted a trigger signal or the victim radio having transmitting an acknowledgment which will cause the victim radio to receive the desired signal based on a victim radio protocol. At 604, a determination is made whether the aggressor radio is to transmit an aggressor signal. This indication may be based on the aggressor radio receiving a trigger signal or the aggressor radio having received an acknowledgment which will cause the radio to transmit the aggressor signal based on an aggressor radio protocol. The MRC may receive an indication from the aggressor radio that the aggressor will be transmitting a signal through a wired communication to the aggressor radio co-located with the victim radio. If the aggressor radio will not transmit the aggressor signal, then processing continues to 612 where the LNA protection circuit is not activated and the AGC applies appropriate gains when receiving the desired signal. If the aggressor radio will transmit the aggressor signal, then processing continues to 606 where a determination is made whether interference of the aggressor signal defined by a power of the aggressor signal minus an isolation between the victim radio and aggressor radio exceeds a threshold. The victim radio may have a sensor at the antenna to measure power of the aggressor signal and desired signal that is received in an example. If the threshold is not exceeded, processing continue to 612 since the desired signal is able to be recovered in presence of the aggressor signal. If the threshold is exceeded, then processing continues to 608 where a determination is made whether the desired signal at the victim radio is greater than a threshold. If the desired signal less than a threshold, then the LNA protection circuit is not activated at 612 and the AGC applies gains in receiving the desired signal. If the desired signal not less than a threshold, then at 610 the LNA protection circuit is activated in response to the desired signal being received and an AGC of the victim radio applies gains when receiving the desired signal which do not change until the victim radio completes reception of the desired signal at 610. The MRC arbitrator may receive an indication from the victim radio when the reception is complete based on the victim state information and then deactivate the LNA protection circuit.

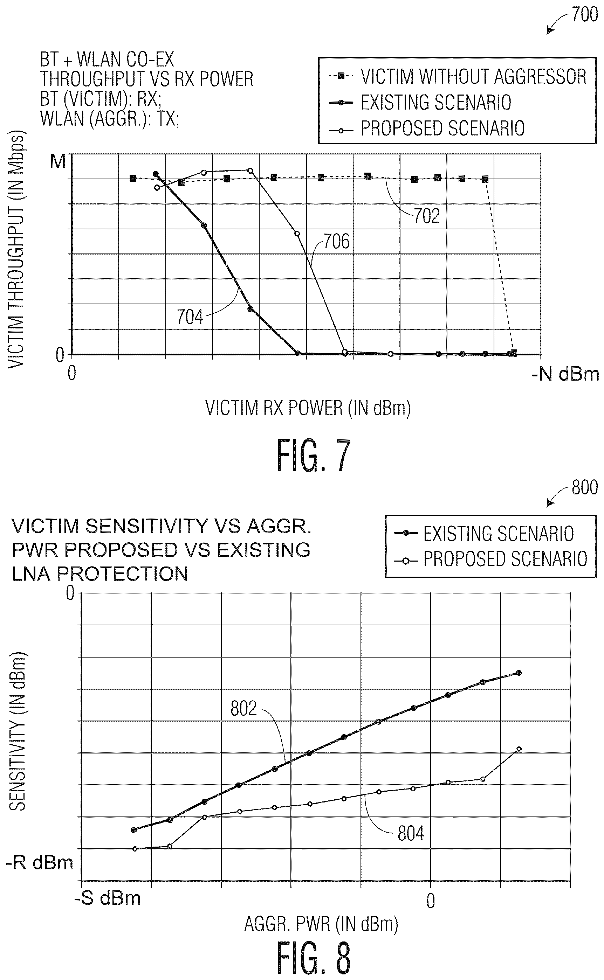

FIG. 7 illustrates throughput of a victim radio versus victim receive power in accordance with an embodiment. The victim radio may be a Bluetooth radio which receives a desired signal and the aggressor radio may be a WiFi radio which transmits an aggressor signal. The variables M and N define a range of axes of a graph 700. Plot 702 may show victim radio throughput versus power of a desired signal at a victim radio when no aggressor signal is present. Plot 704 may show victim radio throughput versus power of a desired signal at a victim radio when an aggressor signal is present and the LNA protection circuit is controlled in the conventional manner. Plot 706 may show victim radio throughput versus power of a desired signal at a victim radio when an aggressor signal is present and the LNA protection circuit is controlled in accordance with an embodiment. Throughput of the proposed operation 706 peaks at a lower power of the desired signal compared to the power of the desired signal in the conventional manner 704 based on using principles of the disclosed embodiment.

FIG. 8 illustrates sensitivity of the victim radio versus power of the aggressor signal in accordance with an embodiment. The variables R and S define a range of axes of a graph 800. Plot 802 shows the sensitivity versus aggressor power for conventional LNA protection circuit control and plot 804 shows the sensitivity versus power of the aggressor signal for the proposed LNA protection circuit control. In an example, sensitivity is improved with the proposed LNA protection circuit compared to the conventional LNA protection circuit. Accordingly, the disclosed embodiment enables improved receipt of the desired signal by the victim radio and reduced bit error.

In an embodiment, a method is disclosed. The method comprises: receiving an indication that an aggressor radio co-located with a victim radio is to transmit an aggressor signal; activating a low noise amplifier (LNA) protection circuit in response to desired signal being received and based on the indication; and deactivating the LNA protection circuit in response to the receipt of the desired signal being completed. In an example, the method further comprises signaling an automatic gain control which controls a gain of an LNA and narrow band amplifier of the victim radio to maintain a same gain while the desired signal is being received. In an example, receiving the indication comprises receiving the indication from a wired connection between the aggressor radio and the victim radio. In an example, the indication includes state information of the aggressor radio which indicates the aggressor radio is to transmit the aggressor signal in response to a signal already received by the aggressor radio. In an example, the method further comprises determining that the victim radio transmitted a trigger signal which triggers the desired signal to be received. In an example, activating the LNA protection circuit further comprises determining that an aggressor power of the aggressor signal minus an indication of isolation between the aggressor radio and the victim radio is greater than a threshold amount. In an example, the method further comprises determining that a power of the desired signal to be received is greater than a threshold amount, wherein the LNA protection circuit is activated based on this the power being greater than the threshold amount. In an example, an output of the LNA protection circuit is provided to an LNA in the victim radio and the aggressor signal and desired signal are within an amplification bandwidth of the LNA. In an example, the victim radio and the aggressor radio are arranged in one or more system on a chip (SoC) and coupled by a wired connection.

In another embodiment, a system is disclosed. The system comprises a victim radio which comprises a multi-radio co-ex arbitrator and an low noise amplifier (LNA) protection circuit; an aggressor radio which is co-located with the victim radio; wherein the multi-radio co-ex arbitrator is arranged to receive an indication that an aggressor radio co-located with a victim radio is to transmit an aggressor signal; activate a low noise amplifier (LNA) protection circuit in response to a desired signal being received and based on the indication; and deactivate the LNA protection circuit in response to the receipt of the desired signal being completed. In an example, the multi-radio co-ex arbitrator is further arranged to signal an automatic gain control which controls a gain of an LNA and narrow band amplifier of the victim radio to maintain a same gain while the desired signal is being received. In an example, the multi-radio co-ex arbitrator arranged to receive the indication comprises receiving the indication from a wired connection between the aggressor radio co-located and the victim radio. In an example, the indication includes state information of the aggressor radio which indicates the aggressor radio is to transmit the aggressor signal in response to a signal already received by the aggressor radio. In an example, the multi-radio co-ex arbitrator is further arranged to determine that the victim radio transmitted a trigger signal which triggers the desired signal to be received. In an example, the multi-radio co-ex arbitrator arranged to activate the LNA protection circuit comprises determining that an aggressor power of the aggressor signal minus an indication of isolation between the aggressor radio and the victim radio is greater than a threshold amount. In an example, the multi-radio co-ex arbitrator is further arranged to determine that a power of the desired signal to be received is greater than a threshold amount, wherein the LNA protection circuit is activated based on this the power being greater than the threshold amount. In an example, an output of the LNA protection circuit is provided to an LNA in the victim radio and the aggressor signal and desired signal are within an amplification bandwidth of the LNA. In an example, the aggressor signal is a control packet and the desired signal is a data packet received in response to a trigger signal transmitted by the victim radio. In an example, the aggressor signal is a data packet and the desired signal is a data packet received in response to a trigger signal transmitted by the victim radio. In an example, the victim radio and the aggressor radio are arranged in one or more system on a chip (SoC) and coupled by a wired connection.

A few implementations have been described in detail above, and various modifications are possible. The disclosed subject matter, including the functional operations described in this specification, can be implemented in electronic circuit, computer hardware, firmware, software, or in combinations of them, such as the structural means disclosed in this specification and structural equivalents thereof: including potentially a program operable to cause one or more content processing apparatus such as a processor to perform the operations described (such as a program encoded in a non-transitory computer-readable medium, which can be a memory device, a storage device, a machine-readable storage substrate, or other physical, machine readable medium, or a combination of one or more of them).

While this specification contains many specifics, these should not be construed as limitations on the scope of what may be claimed, but rather as descriptions of features that may be specific to particular implementations. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations.

Use of the phrase "at least one of" preceding a list with the conjunction "and" should not be treated as an exclusive list and should not be construed as a list of categories with one item from each category, unless specifically stated otherwise. A clause that recites "at least one of A, B, and C" can be infringed with only one of the listed items, multiple of the listed items, and one or more of the items in the list and another item not listed. Other implementations fall within the scope of the following claims.

## Claims

1. A method comprising:
receiving an indication that an aggressor radio co-located with a victim radio is to transmit an aggressor signal;
activating a low noise amplifier, LNA, protection circuit in response to a desired signal being received and based on the indication; and
deactivating the LNA protection circuit in response to the receipt of the desired signal being completed.

2. The method of claim 1, further comprising signaling an automatic gain control which controls a gain of an LNA and narrow band amplifier of the victim radio to maintain a same gain while the desired signal is being received.

3. The method of claim 1 or 2, wherein receiving the indication comprises receiving the indication from a wired connection between the aggressor radio and the victim radio.

4. The method of claim 3, wherein the indication includes state information of the aggressor radio which indicates the aggressor radio is to transmit the aggressor signal in response to a signal already received by the aggressor radio.

5. A system comprising:
a victim radio which comprises a multi-radio co-ex arbitrator and an low noise amplifier (LNA) protection circuit;
an aggressor radio which is co-located with the victim radio;
wherein the multi-radio co-ex arbitrator is arranged to receive an indication that an aggressor radio co-located with a victim radio is to transmit an aggressor signal; activate a low noise amplifier (LNA) protection circuit in response to a desired signal being received and based on the indication; and deactivate the LNA protection circuit in response to the receipt of the desired signal being completed.

6. The system of claim 5, wherein the multi-radio co-ex arbitrator is further arranged to signal an automatic gain control which controls a gain of an LNA and narrow band amplifier of the victim radio to maintain a same gain while the desired signal is being received.

7. The system of claim 5 or 6, wherein the multi-radio co-ex arbitrator arranged to receive the indication comprises receiving the indication from a wired connection between the aggressor radio co-located and the victim radio.

8. The system of any of claims 5 to 7, wherein the indication includes state information of the aggressor radio which indicates the aggressor radio is to transmit the aggressor signal in response to a signal already received by the aggressor radio.

9. The system of any of claims 5 to 8, wherein the multi-radio co-ex arbitrator is further arranged to determine that the victim radio transmitted a trigger signal which triggers the desired signal to be received.

10. The system of any of claims 5 to 9, wherein the multi-radio co-ex arbitrator arranged to activate the LNA protection circuit comprises determining that an aggressor power of the aggressor signal minus an indication of isolation between the aggressor radio and the victim radio is greater than a threshold amount.

11. The system of claim 10, wherein the multi-radio co-ex arbitrator is further arranged to determine that a power of the desired signal to be received is greater than a threshold amount wherein the LNA protection circuit is activated based on this the power being greater than the threshold amount.

12. The system of any of claims 5 to 11, wherein an output of the LNA protection circuit is provided to an LNA in the victim radio and the aggressor signal and desired signal are within an amplification bandwidth of the LNA.

13. The system of any of claims 5 to 12, wherein the aggressor signal is a control packet and the desired signal is a data packet received in response to a trigger signal transmitted by the victim radio.

14. The system of any of claims 5 to13, wherein the aggressor signal is a data packet and the desired signal is a data packet received in response to a trigger signal transmitted by the victim radio.

15. The system of any of claims 5 to 14, wherein the victim radio and the aggressor radio are arranged in one or more system on a chip (SoC) and coupled by a wired connection.
